# EUROPÄISCHE PATENTSCHRIFT

(11) **EP 3 149 834 B1**
(45) Veröffentlichungstag und Bekanntmachung des Hinweises auf die Patenterteilung: **29.04.2020**
(21) Anmeldenummer: 15713308.3
(22) Anmeldetag: 24.03.2015
(51) Int. Cl.: H02J 9/00, H02M 1/00

(54) **ENERGIEVERSORGUNGSGERÄT MIT VOM AUSGANGSSTROM ABHÄNGIGEN ÜBERGÄNGEN ZWISCHEN BETRIEB UND STAND-BY**
ELEKTRICAL POWER SUPPLY WITH OUTPUT CURRENT DEPENDENT TRANSITIONS BETWEEN OPERATION AND STAND-BY
ALIMENTATION ÉLECTRIQUE AVEC TRANSITION ENTRE L'OPÉRATION ET MODE ÉCO DÉPENDANTE DE COURANT DE SORTIE

(30) Priorität: 28.05.2014 DE 102014107545
(43) Veröffentlichungstag der Anmeldung: 05.04.2017
(73) Patentinhaber: Phoenix Contact GmbH & Co. KG, 32825 Blomberg (DE)
(72) Erfinder: ZEUCH, Jochen, 32825 Blomberg (DE); HENKEL, Hartmut, 32825 Blomberg (DE)
(74) Vertreter: Patentship Patentanwaltsgesellschaft mbH
(86) Internationale Anmeldenummer: PCT/EP2015/056303
(87) Internationale Veröffentlichungsnummer: WO 2015/180861

(56) Entgegenhaltungen:
- DE-T5-112011 105 015
- DE-U1-202014 002 223
- US-A1- 2003 067 287
- US-A1- 2004 066 662
- US-A1- 2005 046 399
- US-A1- 2009 108 822
- US-B1- 6 320 766
- US-B1- 7 064 531

## Beschreibung

Die vorliegende Erfindung betrifft ein Energieversorgungsgerät, insbesondere ein Netzteil.

Ein Energieversorgungsgerät, wie ein Netzteil ist ein eigenständiges Gerät oder eine Baugruppe zur Energieversorgung von Geräten oder Baugruppen, die andere Spannungen und Ströme benötigen, als von dem Energieversorgungsnetz bereitgestellt werden.

Für gewöhnlich arbeitet ein elektrisches Energieversorgungsgerät unabhängig von der an dem Energieversorgungsgerät angeschlossenen Last, sobald eine Eingangsspannung an das Energieversorgungsgerät angelegt worden ist.

Bei einem Wechsel in den Stand-by- Betrieb einer an das Energieversorgungsgerät angeschlossenen Last stellt das Energieversorgungsgerät für gewöhnlich weiterhin die an das Energieversorgungsgerät angelegte Eingangsspannung für die angeschlossene Last bereit. Im Falle einer Abschaltung der Energieversorgung des Energieversorgungsgerätes mit angeschlossener Last, wird üblicherweise eine Schalteinheit, beispielsweise ein Schütz, vorgeschaltet, um einem erhöhten Spannungsaufbau an den elektrisch miteinander verbundenen Energieversorgungsgerät und der Last während der Abschaltung der Energieversorgung entgegen zu wirken.

Bei einem Wiedereinschalten aus einem ausgeschalteten Zustand, wie beispielsweise dem Stand-by Zustand, wird üblicherweise eine Hilfsenergie benötigt, um das Energieversorgungsgerät von seinem Stand-by Zustand wieder in den aktiven Zustand zu überführen. Einige Energieversorgungsgeräte weisen daher einen digitalen Eingang auf, um das Energieversorgungsgerät mit einem festen Pegel ein- oder auszuschalten. Hierzu wird ein Steuereingang, der von einer Steuerung angesteuert wird, benötigt.

Die Druckschrift DE 196 00 962 A1 offenbart ein Schaltnetzteil mit einem Stand-by-Betrieb. Zur Umschaltung von dem Stand-by-Betrieb in den Normalbetrieb wird das Signal an einem Anschluss zur Öffnung eines Schalters abgeschaltet, so dass die Ausgangsspannungen wieder über eine Zenerdiode geregelt werden.

Die Druckschrift US 6 320 766 B1 betrifft einen Energiesparschaltkreis eines AC/DC Adapters für einen tragbaren Computer.

Die Druckschrift US 2004/066662 A1 betrifft eine Spannungsversorgungsvorrichtung mit einem Lastdetektor, der detektiert, ob eine externe Vorrichtung bzw. Last an den Ausgangsanschlüssen der Spannungsversorgungsvorrichtung angeschlossen ist.

Die Druckschrift US 7 064 531 B1 betrifft einen Spannungsregler mit MOS Transistoren.

Die Druckschrift US 2003/067287 A1 betrifft eine Versorgungsspannungsschaltung, bei der eine Versorgungsspannung durch einen DC/DC Umsetzer aus einer Netzspannung erzeugt wird.

Die Druckschrift US 2009/108822 A1 betrifft eine Spannungsversorgungsschaltung, die ihren Operationsmode automatisch zwischen einem Leichtlastmodus und einem Schwerlastmodus umschaltet, und zwar abhängig von einem Level ihres Ausgangsstromes.

Die Druckschrift DE 11 2011 105 015 T5 betrifft eine Energieversorgung die in Abhängigkeit von Ausgangsstromschwellen zwischen verschiedenen Betriebsmodi und damit verbundenen unterschiedlichen Ausgangsspannungen hin- und her schaltet.

Es ist die der Erfindung zugrundeliegende Aufgabe, ein Energieversorgungsgerät und ein Verfahren anzugeben, dass ein Umschalten des Energieversorgungsgerätes zwischen zwei Betriebszuständen des Energieversorgungsgerätes selbstständig und effizient durchführt. Diese Aufgabe wird durch die Gegenstände der unabhängigen Patentansprüche gelöst. Vorteilhafte Ausführungsformen der Erfindung sind Gegenstand der Figuren, der Beschreibung und der abhängigen Ansprüche.

Die vorliegende Erfindung basiert auf der Erkenntnis, dass ein Umschalten des Energieversorgungsgerätes zwischen einem ersten und einem zweiten Betriebszustand über eine Erfassung der Stromamplitude am Ausgang des Energieversorgungsgerätes selbstständig und effizient durchgeführt werden kann.

Gemäß einem ersten Aspekt der Erfindung wird die Aufgabe durch ein Energieversorgungsgerät zum Bereitstellen einer Ausgangsspannung und eines Ausgangsstroms gelöst, wobei das Energieversorgungsgerät einen ersten Betriebszustand und einen zweiten Betriebszustand aufweist. Das Energieversorgungsgerät weist eine Messanordnung zum Erfassen einer Stromamplitude des Ausgangsstromes des Energieversorgungsgerätes und ein Signalgenerator zum Erzeugen der Ausgangsspannung und des Ausgangsstroms auf. Der Signalgenerator ist ausgebildet, in dem ersten Betriebszustand des Energieversorgungsgerätes eine Spannungsamplitude der Ausgangsspannung des Energieversorgungsgerätes zu reduzieren, um in den zweiten Betriebszustand überzugehen, falls die erfasste Stromamplitude einen ersten Stromschwellwert unterschreitet. Der Signalgenerator ist ferner ausgebildet, in dem zweiten Betriebszustand des Energieversorgungsgerätes eine Spannungsamplitude der Ausgangsspannung des Energieversorgungsgerätes zu erhöhen, um in den ersten Betriebszustand überzugehen, falls die erfasste Stromamplitude einen zweiten Stromschwellwert überschreitet.

Die Ausgangsleistung und damit die Ausgangsspannung und der Ausgangsstrom sind im ersten Betriebszustand betragsmäßig höher als im zweiten Betriebszustand.

Der Übergang des Energieversorgungsgerätes von dem ersten Betriebszustand in den zweiten Betriebszustand bewirkt eine Herabsenkung der Ausgangsspannung des Energieversorgungsgerätes um beispielsweise 30% bis 80% oder beispielsweise um 50%. Beispielsweise reduziert der Signalgenerator die Spannungsamplitude der Ausgangsspannung des Energieversorgungsgerätes von 24 V auf 10-12 V herunter, um von den ersten in den zweiten Betriebszustand überzugehen.

Der Signalgenerator reduziert den Ausgangsstrom des Energieversorgungsgerätes um 5-20% oder mehr unterhalb des Nennstromes, um von den ersten in den zweiten Betriebszustand überzugehen.

Die Messanordnung erfasst wiederholt in zeitlichen Abständen, die Stromamplitude des Ausgangsstromes. Der Signalgenerator vergleicht die erfasste Stromamplitude mit dem ersten und dem zweiten Stromschwellwert, welche in einem Speicher des Signalgenerators ablegbar oder abgelegt sind.

Das Energieversorgungsgerät ist beispielsweise ein Netzteil.

Durch das erfindungsgemäße Energieversorgungsgerät wird der Vorteil erreicht, dass ein Übergang zwischen dem ersten und dem zweiten Betriebszustand des Energieversorgungsgerätes automatisch erfolgt.

In einer vorteilhaften Ausführungsform des Energieversorgungsgerätes ist der erste Betriebszustand ein Aktivzustand und der zweite Betriebszustand ein Energiesparzustand, insbesondere ein Stand-by-Modus oder ein Sleep-Modus. Im Aktivzustand sind die Ausgangsspannung und der Ausgangstrom auf jeweils einen Wert eingestellt, der den Betrieb des an das Energieversorgungsgerät angeschlossenen elektrischen Gerätes erlaubt, während im Energiesparzustand die Ausgangsspannung und der Ausgangsstrom jeweils auf einen Wert eingestellt sind, dass ein Betrieb des an das Energieversorgungsgerät angeschlossenen elektrischen Gerätes einschränkt.

Dadurch wird der Vorteil erreicht, dass Energie automatisch eingespart werden kann.

In einer vorteilhaften Ausführungsform des Energieversorgungsgerätes ist der zweite Stromschwellwert der erste Stromschwellwert oder ein weiterer Stromschwellwert. Der erste Stromschwellwert beträgt umgerechnet beispielsweise 5% -20% oder mehr unterhalb der Amplitude des Ausgangsstromes im ersten Betriebszustand.

Entspricht der erste Stromschwellwert gleich dem zweiten Stromschwellwert, so erfolgt ein Übergang des Energieversorgungsgerätes von seinem zweiten Betriebszustand in den ersten Betriebszustand, falls der erste Stromschwellwert beispielsweise wieder überschritten ist.

Für den Fall, dass der zweite Stromschwellwert betragsmäßig höher als der erste Stromschwellwert ist, erfolgt ein Übergang des Energieversorgungsgerätes von seinem zweiten Betriebszustand in den ersten Betriebszustand erst, falls der zweite Stromschwellwert erreicht oder überschritten ist.

Für den Fall, dass der zweite Stromschwellwert betragsmäßig niedriger als der erste Stromschwellwert ist, erfolgt ein Übergang des Energieversorgungsgerätes von dem zweiten Betriebszustand in den ersten Betriebszustand bereits dann, falls der zweite Stromschwellwert erreicht oder überschritten ist. Beispielsweise ist der zweite Stromschwellwert niedriger als der erste Stromschwellwert, um einen Übergang des Energieversorgungsgerätes von seinem zweiten Betriebszustand in den ersten Betriebszustand auch für eine an das Energieversorgungsgerät angeschlossene elektrische Last zu ermöglichen, deren Laststrom und Lastspannung unterhalb eines Mindestlaststromes und unterhalbe einer Mindestlastspannung ist.

Durch den zweiten Stromschwellwert wird der Vorteil erreicht, dass bei einem Überschreiten des zweiten Stromschwellwertes durch den Laststrom einer an dem Energieversorgungsgerät angeschlossenen Last das Energieversorgungsgerät automatisch, ohne die Verwendung einer zusätzlichen Energiequelle, von dem zweiten Betriebszustand in den ersten Betriebszustand übergeht.

In einer vorteilhaften Ausführungsform des Energieversorgungsgerätes sind der erste Stromschwellwert oder der zweite Stromschwellwert oder der weitere Stromschwellwert einstellbar oder vorgespeichert. Abhängig von der an das Energieversorgungsgerät angeschlossenen Last können der erste Stromschwellwert und der zweite Stromschwellwert eingestellt werden oder voreingespeicherte Stromschwellwerte verwendet werden, um das Energieversorgungsgerät von seinem ersten Betriebszustand in seinen zweiten Betriebszustand und umgekehrt zu überführen.

Dadurch wird der Vorteil erreicht, dass das Energieversorgungsgerät flexibel einsetzbar ist, insbesondere für Verbraucher mit unterschiedlichen Lastströmen und Lastspannungen, und dabei das automatische Übergehen von dem ersten Betriebszustand in den zweiten Betriebszustand und umgekehrt nicht verliert.

In einer vorteilhaften Ausführungsform des Energieversorgungsgerätes ist der Signalgenerator ausgebildet, die erfasste Stromamplitude mit dem ersten Stromschwellwert oder dem zweiten Stromschwellwert oder dem weiteren Stromschwellwert zu vergleichen. Der Signalgenerator vergleicht die erfasste Stromamplitude mit den Stromschwellwerten widerholt zu vorbestimmten Zeitpunkten. Bevorzugt sind die vorbestimmten Zeitpunkte zu Zeitpunkten nach Ablauf von äquidistanten Zeitintervallen gegeben, welche beispielsweise im Sekundenbereich liegen. Beispielsweise werden nach Ablauf von jeweils 30, 20, 10 oder 5 Sekunden die Stromamplitude von der Messanordnung erfasst und anschließend von dem Signalgenerator mit dem ersten Stromschwellwert oder dem zweiten Stromschwellwert oder dem weiteren Stromschwellwert verglichen.

Dadurch wird der Vorteil erreicht, dass das Energieversorgungsgerät zwischen dem ersten Betriebszustand und dem zweiten Betriebszustand automatisch umschaltet, sobald der Stromschwellwert durch den Laststrom unterschritten oder überschritten ist.

In einer vorteilhaften Ausführungsform des Energieversorgungsgerätes ist der Signalgenerator ausgebildet, die Spannungsamplitude der Ausgangsspannung des Energieversorgungsgerätes auf einen einstellbaren ersten oder vorgespeicherten ersten Spannungsamplitudenwert zu reduzieren, falls die erfasste Stromamplitude den ersten Stromschwellwert unterschreitet. Bevorzugt ist der erste Schwellstromwert in einem Speicher des Signalgenerators abgelegt oder ablegbar. Mit Reduzierung der Ausgangsspannung kann zugleich der Ausgangsstrom des Energieversorgungsgerätes reduziert werden, so dass das Energieversorgungsgerät von dem ersten Betriebszustand in den zweiten Betriebszustand automatisch, d.h. ohne zusätzliche Energiequelle, übergeht.

Dadurch wird der Vorteil erreicht, dass eine Energieeinsparung durch das Energieversorgungsgerät automatisch erfolgt.

Der Signalgenerator ist dazu ausgebildet, die Spannungsamplitude der Ausgangsspannung des Energieversorgungsgerätes in dem ersten Betriebszustand nach Ablauf eines einstellbaren oder vorgespeicherten ersten Verzögerungszeitintervalls zu reduzieren. Nach einer ersten Erfassung einer Stromamplitude unterhalb des ersten Stromschwellwertes führt die Messanordnung nach Ablauf des ersten Verzögerungszeitintervalls eine weitere Erfassung der Stromamplitude durch. Liegt die weitere erfasste Stromamplitude ebenfalls unterhalb des ersten Stromschwellwertes, so reduziert der Signalgenerator die Spannungsamplitude der Ausgangsspannung des Energieversorgungsgerätes. Beispielsweise umfasst das erste

Verzögerungsintervall eine Zeitspanne von mehreren Sekunden, beispielsweise von 30, 20, 10, 5 oder 3 Sekunden.

Dadurch wird der Vorteil erreicht, dass ein Übergang von dem ersten Betriebszustand in den zweiten Betriebszustand nicht durch zufällige Ausgangsstromschwankungen einleitbar ist.

In einer vorteilhaften Ausführungsform des Energieversorgungsgerätes ist der Signalgenerator ausgebildet, die Spannungsamplitude der Ausgangsspannung des Energieversorgungsgerätes auf einen einstellbaren zweiten oder vorgespeicherten zweiten Spannungsamplitudenwert zu erhöhen, falls die erfasste Stromamplitude den zweiten Stromschwellwert überschreitet. Erfasst die Messanordnung während eines Betriebes des Energieversorgungsgerätes in dem zweiten Betriebszustand eine erfasste Stromamplitude, die den zweiten Stromschwellwert überschreitet, erhöht der Signalgenerator die Spannungsamplitude der Ausgangsspannung des Energieversorgungsgerätes auf einen einstellbaren zweiten oder vorgespeicherten zweiten Spannungsamplitudenwert.

Beispielsweise wird die Spannungsamplitude von einem Wert im Bereich von 8 V bis 14 V oder von 10 V bis 12 V im zweiten Betriebszustand auf eine Spannungsamplitude mit einem Wert zwischen 20V und 60 V oder zwischen 20 V und 28 V, oder beispielsweise auf 24 V im ersten Betriebszustand erhöht.

Dadurch wird der Vorteil erreicht, dass das Energieversorgungsgerät automatisch von dem zweiten Betriebszustand in den ersten Betriebszustand übergeht.

Der Signalgenerator ist dazu ausgebildet, die Spannungsamplitude der Ausgangsspannung des Energieversorgungsgerätes nach Ablauf eines vorgespeicherten zweiten Verzögerungszeitintervalls nach der Erfassung der Überschreitung des zweiten Stromschwellwertes der Stromamplitude zu erhöhen. Das vorgespeicherte zweite Verzögerungszeitintervall umfasst beispielsweise dieselbe Zeitspanne wie das erste Verzögerungszeitintervall. Beispielsweise umfasst das zweite Verzögerungsintervall eine Zeitspanne von mehreren Sekunden, beispielsweise von 30, 20, 10, 5 oder 3 Sekunden. Es ist beispielsweise auch denkbar, dass das zweite Verzögerungszeitintervall eine kürzere Zeitspanne als das erste Verzögerungszeitintervall umfasst, beispielsweise von 20, 10, 5, 3 oder 1 Sekunde.

Dadurch wird der Vorteil erreicht, dass ein Übergang von dem zweiten Betriebszustand in den ersten Betriebszustand nicht durch zufällige Ausgangsstromschwankungen einleitbar ist. In einer vorteilhaften Ausführungsform des Energieversorgungsgerätes weist die Messanordnung einen Messwiederstand auf. Der Messwiederstand ist ausgebildet, die Stromamplitude des Ausgangsstromes auf der Basis eines Spannungsabfalls an dem Messwiederstand zu erfassen. Beispielsweise ist der Messwiderstand in Form eines Messshunts vorgesehen. Ein Messshunt ist ein niederohmiger elektrischer Widerstand, der zur Messung des elektrischen Stromes verwendet wird. Der Strom, der durch einen Messshunt fließt, verursacht einen zu ihm proportionalen Spannungsabfall, der gemessen wird. Der Messshunt-Widerstand wird zu einer Messschaltung parallel geschaltet und dann dessen Spannungsabfall erfasst. Da man höhere Stromstärken nicht direkt messen kann, leitet man sie durch einen Messshunt-Widerstand und misst den daran entstehenden Spannungsabfall. Dementsprechend liegt der Widerstandswert von Messshunt-Widerständen im Milli-Ohm-Bereich oder darunter bei einigen zehntel oder hundertsten Milli-Ohm.

Dadurch wird der Vorteil erreicht, dass die Stromamplitude des Ausgangsstromes durch die Messanordnung des Energieversorgungsgerätes erfassbar ist.

In einer vorteilhaften Ausführungsform des Energieversorgungsgerätes weist der Signalgenerator einen Transformator mit einer Primärseite, welche mit einer Eingangsspannung beaufschlagbar ist, und einer Sekundärseite zum Ausgeben der Ausgangsspannung auf. Der Transformator des Signalgenerators weist eine Primärwicklung auf, die direkt mit der Wechselspannung des Energieversorgungsnetzes und der Netzfrequenz des Energieversorgungsnetzes gespeist wird. Der Transformator des Signalgenerators setzt die Eingangsspannung, d.h. die Wechselspannung des Energieversorgungsnetzes, auf den oder die erforderlichen Ausgangsspannungswerte um und stellt die galvanische Netztrennung sicher.

Die Sekundär-Wechselspannung auf der Sekundärseite des Transformators kann mittels eines Gleichrichters und eines Glättungskondensators in eine Ausgangsgleichspannung umgewandelt werden, welche dann am Ausgang des Signalgenerators bereitgestellt werden kann. Zudem stellen gegebenenfalls ein nachfolgender Linearregler und ein Pufferkondensator eine konstant haltbare Ausgangsspannung sicher.

Dadurch wird der Vorteil erreicht, dass das Energieversorgungsgerät mit einer beliebigen Ausgangsspannung beaufschlagt werden kann.

Gemäß einem zweiten Aspekt der Erfindung wird die Aufgabe durch ein Verfahren zum Betreiben eines Energieversorgungsgerätes gelöst, wobei das Energieversorgungsgerät einen ersten Betriebszustand und einen zweiten Betriebszustand, eine Messanordnung zum Erfassen einer Stromamplitude eines Ausgangsstromes des Energieversorgungsgerätes sowie einen Signalgenerator zum Steuern einer Spannungsamplitude der Ausgangsspannung des Energieversorgungsgerätes aufweist.

Das Verfahren umfasst ein Erfassen einer Stromamplitude des Ausgangsstromes des Energieversorgungsgerätes mittels der Messanordnung; ein Reduzieren einer Spannungsamplitude der Ausgangsspannung des Energieversorgungsgerätes in dem ersten Betriebszustand des Energieversorgungsgerätes mittels des Signalgenerators, um in den zweiten Betriebszustand überzugehen, falls die erfasste Stromamplitude einen ersten Stromschwellwert unterschreitet.

Ferner umfasst das Verfahren ein Erhöhen der Spannungsamplitude der Ausgangsspannung des Energieversorgungsgerätes in dem zweiten Betriebszustand des Energieversorgungsgerätes mittels des Signalgenerators, um in den ersten Betriebszustand überzugehen, falls die erfasste Stromamplitude einen zweiten Stromschwellwert überschreitet.

Die Ausgangsleistung und damit die Ausgangsspannung und der Ausgangsstrom werden im ersten Betriebszustand betragsmäßig auf einen höheren Wert eingestellt als im zweiten Betriebszustand. Bei einem Übergang des Energieversorgungsgerätes von dem ersten Betriebszustand in den zweiten Betriebszustand wird die Ausgangsspannung des Energieversorgungsgerätes beispielsweise um 30% bis 80% oder beispielsweise um 50% herabgesenkt. Beispielsweise wird die Spannungsamplitude der Ausgangsspannung des Energieversorgungsgerätes von 24 V auf 10-12 V reduziert, um von dem ersten Betriebszustand in den zweiten Betriebszustand überzugehen.

Der Ausgangsstrom des Energieversorgungsgerätes wird dabei um 5-20% oder mehr unterhalb des Nennstromes reduziert, damit das Energieversorgungsgerät von dem ersten Betriebszustand in den zweiten Betriebszustand übergeht.

Von der Messanordnung wird wiederholt in zeitlichen Abständen die Stromamplitude des Ausgangsstromes erfasst.

Die erfasste Stromamplitude wird von dem Signalgenerator mit dem ersten Stromschwellwert und dem zweiten Stromschwellwert verglichen. Der zweite Stromschwellwert wird beispielsweise gleich dem zweiten Stromschwellwert eingestellt oder vorgespeichert. Für den zweiten Stromschwellwert kann beispielsweise auch ein niedrigerer oder höherer Stromschwellwert eingestellt oder vorgespeichert werden.

Im Falle eines niedrigeren zweiten Stromschwellwertes kann ein an dem Energieversorgungsgerät angeschlossener Verbraucher, der eine Last mit geringem Laststrom und geringer Lastspannung aufweist, von dem Energieversorgungsgerät erkannt werden. Nach dem erfindungsgemäßen Verfahren geht das Energieversorgunggerät dann automatisch von dem zweiten Betriebszustand in den ersten Betriebszustand über.

Das Energieversorgungsgerät ist beispielsweise ein Netzteil.

Der erste Betriebszustand bei dem erfindungsgemäßen Verfahren wird als ein Aktivzustand und der zweite Betriebszustand als ein Energiesparzustand, insbesondere ein Stand-by-Modus oder ein Sleep-Modus, eingestellt. Im Aktivzustand werden die Ausgangsspannung und der Ausgangstrom auf jeweils einen Wert eingestellt, der den Betrieb des an das Energieversorgungsgerät angeschlossenen elektrischen Gerätes erlaubt, während im Energiesparzustand die Ausgangsspannung und der Ausgangsstrom jeweils auf einen Wert eingestellt werden, dass ein Betrieb des an das Energieversorgungsgerät angeschlossenen elektrischen Gerätes einschränkt.

Durch das erfindungsgemäße Verfahren wird der Vorteil erreicht, dass ein Übergang zwischen dem ersten und dem zweiten Betriebszustand des Energieversorgungsgerätes automatisch erfolgt.

In einer vorteilhaften Ausführungsform des Verfahrens wird die erfasste Stromamplitude von dem Signalgenerator mit dem ersten Stromschwellwert oder dem zweiten Stromschwellwert oder dem weiteren Stromschwellwert verglichen. Zu vorbestimmten Zeitpunkten wird von dem Signalgenerator die erfasste Stromamplitude mit den Stromschwellwerten verglichen. Beispielsweise sind die vorbestimmten Zeitpunkte durch Ablauf von äquidistanten Zeitintervallen bestimmt, welche beispielsweise im Sekundenbereich liegen.

Beispielsweise werden nach Ablauf von jeweils 30, 20, 10 oder 5 Sekunden die Stromamplitude von der Messanordnung erfasst und anschließend von dem Signalgenerator mit dem ersten Stromschwellwert oder dem zweiten Stromschwellwert oder dem weiteren Stromschwellwert verglichen.

Abhängig von den angeschlossenen Verbrauchern und deren Lasten, d.h. deren Lastspannungen und Lastströmen, werden der erste Stromschwellwert oder der zweite Stromschwellwert oder der weitere Stromschwellwert eingestellt oder vorgespeichert.

Dadurch wird der Vorteil erreicht, dass das erfindungsgemäße Verfahren auf Verbraucher mit unterschiedlichen Lasten angewendet werden kann und ein Übergang zwischen dem ersten Betriebszustand und dem zweiten Betriebszustand erfolgt, sobald der erste Stromschwellwert durch den Laststrom unterschritten oder der zweite Stromschwellwert durch den Laststrom überschritten wird.

In einer vorteilhaften Ausführungsform des Verfahrens wird von dem Signalgenerator die Spannungsamplitude der Ausgangsspannung des Energieversorgungsgerätes auf einen einstellbaren ersten oder vorgespeicherten ersten Spannungsamplitudenwert reduziert, falls die erfasste Stromamplitude den ersten Stromschwellwert unterschreitet. Beispielsweise wird der erste Schwellstromwert in einem Speicher des Signalgenerators abgelegt.

Mit Reduzierung der Ausgangsspannung wird zugleich der Ausgangsstrom des Energieversorgungsgerätes reduziert, so dass das Energieversorgungsgerät von seinem ersten Betriebszustand in den zweiten Betriebszustand automatisch, d.h. ohne zusätzliche Energiequelle, übergeht.

Dadurch wird der Vorteil erreicht, dass eine Reduzierung der bereitgestellten Energie am Ausgang des Energieversorgungsgerätes automatisch durch Anwendung des erfindungsgemäßen Verfahrens erfolgt.

Von dem Signalgenerator wird die Spannungsamplitude der Ausgangsspannung des Energieversorgungsgerätes in dem ersten Betriebszustand nach Ablauf eines einstellbaren oder vorgespeicherten ersten Verzögerungszeitintervalls reduziert. Nach einer ersten Erfassung einer Stromamplitude unterhalb des ersten Stromschwellwertes wird von der Messanordnung nach Ablauf des ersten Verzögerungszeitintervalls eine weitere Stromamplitude erfasst. Liegt die weitere erfasste Stromamplitude auch unterhalb des ersten Stromschwellwertes, so wird von dem Signalgenerator die Spannungsamplitude der Ausgangsspannung des Energieversorgungsgerätes reduziert. Beispielsweise umfasst das erste Verzögerungsintervall eine Zeitspanne von mehreren Sekunden, beispielsweise von 30, 20, 10, 5 oder 3 Sekunden.

Dadurch wird der Vorteil erreicht, dass ein Übergang von dem ersten Betriebszustand in den zweiten Betriebszustand nicht durch zufällige Ausgangsstromschwankungen eingeleitet werden kann.

In einer vorteilhaften Ausführungsform des Verfahrens wird von dem Signalgenerator die Spannungsamplitude der Ausgangsspannung des Energieversorgungsgerätes auf einen einstellbaren zweiten oder vorgespeicherten zweiten Spannungsamplitudenwert erhöht, falls die erfasste Stromamplitude den Stromschwellwert oder den weiteren Stromschwellwert überschreitet. Erfasst die Messanordnung während eines Betriebes des Energieversorgungsgerätes in dem zweiten Betriebszustand eine erfasste Stromamplitude, die den zweiten Stromschwellwert überschreitet, wird von dem Signalgenerator die Spannungsamplitude der Ausgangsspannung des Energieversorgungsgerätes auf einen einstellbaren zweiten oder vorgespeicherten zweiten Spannungsamplitudenwert erhöht. Beispielsweise wird die Spannungsamplitude von einem Wert im Bereich von 8 V bis 14 V oder beispielsweise von 10 V bis 12 V im zweiten Betriebszustand auf eine Spannungsamplitude mit einem Wert zwischen 20 V und 60 V, oder beispielsweise zwischen 20 V und 28 V, oder beispielsweise auf 24 V im ersten Betriebszustand erhöht.

Dadurch wird der Vorteil erreicht, dass bei Anwendung des Verfahrens das Energieversorgungsgerät automatisch von dem zweiten Betriebszustand in den ersten Betriebszustand übergeht.

Von dem Signalgenerator wird die Spannungsamplitude der Ausgangsspannung des Energieversorgungsgerätes nach Ablauf eines vorgespeicherten zweiten Verzögerungszeitintervalls nach der Erfassung der Überschreitung des zweiten Stromschwellwertes der Stromamplitude erhöht. Das vorgespeicherte zweite Verzögerungszeitintervall umfasst beispielsweise dieselbe Zeitspanne wie das erste Verzögerungszeitintervall.

Beispielsweise umfasst das zweite Verzögerungsintervall eine Zeitspanne von mehreren Sekunden, beispielsweise von 30, 20, 10, 5 oder 3 Sekunden. Beispielsweise umfasst das zweite Verzögerungszeitintervall eine kürzere Zeitspanne als das erste Verzögerungszeitintervall, beispielsweise von 20, 10, 5, 3 oder 1 Sekunde.

Durch das erfindungsgemäße Verfahren wird der Vorteil erreicht, dass ein Übergang von dem zweiten Betriebszustand in den ersten Betriebszustand nicht durch zufällige Ausgangsstromschwankungen eingeleitet werden kann.

Gemäß einem dritten Aspekt der Erfindung wird die Aufgabe durch ein Verfahren zum Betreiben eines Energieversorgungsgerätes gelöst, wobei das Energieversorgungsgerät einen ersten Betriebszustand und einen zweiten Betriebszustand aufweist. Eine Stromamplitude des Ausgangsstromes des Energieversorgungsgerätes wird erfasst. Ferner wird eine Spannungsamplitude der Ausgangsspannung des Energieversorgungsgerätes in dem ersten Betriebszustand des Energieversorgungsgerätes mittels eines Signalgenerators reduziert, um in den zweiten Betriebszustand überzugehen, falls die erfasste Stromamplitude einen ersten Stromschwellwert unterschreitet; und die Spannungsamplitude der Ausgangsspannung des Energieversorgungsgerätes in dem zweiten Betriebszustand des Energieversorgungsgerätes wird mittels des Signalgenerators erhöht, um in den ersten Betriebszustand überzugehen, falls die erfasste Stromamplitude einen zweiten Stromschwellwert überschreitet.

Die Ausgangsleistung und damit die Ausgangsspannung und der Ausgangsstrom werden im ersten Betriebszustand betragsmäßig auf einen höheren Wert eingestellt als im zweiten Betriebszustand.

Bei einem Übergang des Energieversorgungsgerätes von dem ersten Betriebszustand in den zweiten Betriebszustand wird die Ausgangsspannung des Energieversorgungsgerätes beispielsweise jeweils um 30% bis 80% oder beispielsweise um 50% herabgesenkt. Beispielsweise wird die Spannungsamplitude der Ausgangsspannung des Energieversorgungsgerätes von 24 V auf 10-12 V reduziert, um von dem ersten Betriebszustand in den zweiten Betriebszustand überzugehen.

Der Ausgangsstrom des Energieversorgungsgerätes wird dabei beispielsweise um 5-20% oder mehr unterhalb des Nennstromes reduziert, um von dem ersten Betriebszustand in den zweiten Betriebszustand überzugehen.

In zeitlichen Abständen wird die Stromamplitude des Ausgangsstromes wiederholt erfasst. Die erfasste Stromamplitude wird mit dem ersten Stromschwellwert und dem zweiten Stromschwellwert verglichen. Der zweite Stromschwellwert wird beispielsweise gleich dem zweiten Stromschwellwert eingestellt oder vorgespeichert. Für den zweiten Stromschwellwert kann beispielsweise auch ein niedrigerer oder höherer Stromschwellwert eingestellt oder vorgespeichert werden.

Nach dem erfindungsgemäßen Verfahren geht das Energieversorgunggerät automatisch von dem zweiten Betriebszustand in den ersten Betriebszustand über. Der erste Betriebszustand bei dem erfindungsgemäßen Verfahren wird als ein Aktivzustand und der zweite Betriebszustand als ein Energiesparzustand, insbesondere ein Stand-by-Modus oder ein Sleep-Modus, eingestellt.

Im Aktivzustand werden die Ausgangsspannung und der Ausgangstrom auf jeweils einen Wert eingestellt, der den Betrieb eines an das Energieversorgungsgerät angeschlossenen elektrischen Gerätes erlaubt, während im Energiesparzustand die Ausgangsspannung und der Ausgangsstrom jeweils auf einen Wert eingestellt werden, die einen Betrieb des an das Energieversorgungsgerät angeschlossenen elektrischen Gerätes einschränken.

Dadurch wird der Vorteil erreicht, dass ein Übergang zwischen dem ersten und dem zweiten Betriebszustand automatisch erfolgt.

Ausführungsbeispiele der Erfindung sind in den Zeichnungen dargestellt und werden im Folgenden näher beschrieben.

Es zeigen:
- Fig. 1: eine schematische Darstellung eines Energieversorgungsgerätes;
- Fig. 2: eine schematische Darstellung einer Messanordnung des Energieversorgungsgerätes;
- Fig. 3: eine schematische Darstellung eines Signalgenerators des Energieversorgungsgerätes;
- Fig. 4: eine schematische Darstellung des Energieversorgungsgerätes mit angeschlossenem Verbraucher;
- Fig. 5: ein schematisches Diagramm zum Ablauf des Verfahrens zum Betreiben des Energieversorgungsgerätes; und
- Fig. 6: eine schematische Darstellung der Zeit gegenüber der Ausgangsspannung und des Ausgangsstromes des Energieversorgungsgerätes.

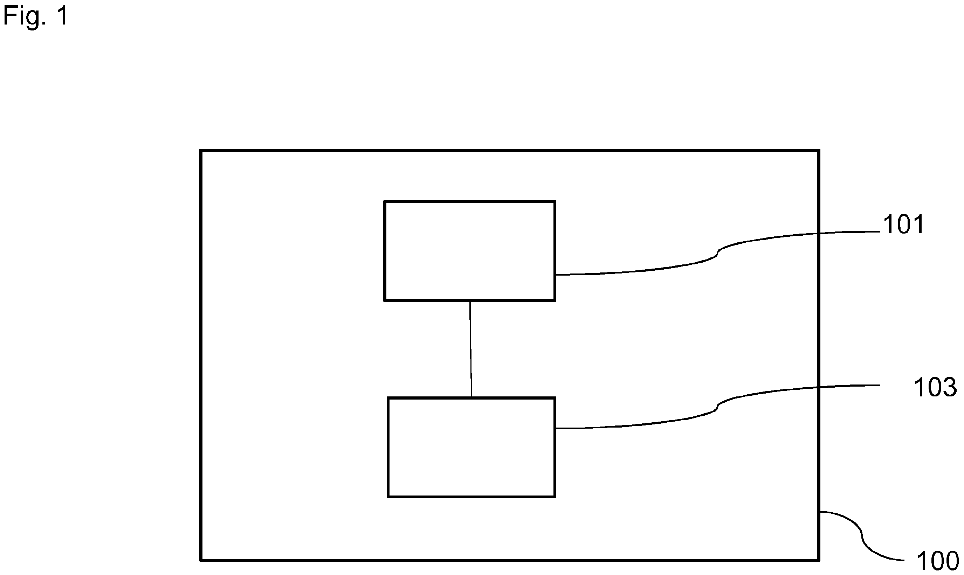

Fig. 1 zeigt eine schematische Darstellung eines Energieversorgungsgerätes 100 mit einer Messanordnung 101 zum Erfassen einer Stromamplitude des Ausgangsstromes des Energieversorgungsgerätes 100 und einem Signalgenerator 103 zum Erzeugen der Ausgangsspannung und des Ausgangsstroms des Energieversorgungsgerätes 100.

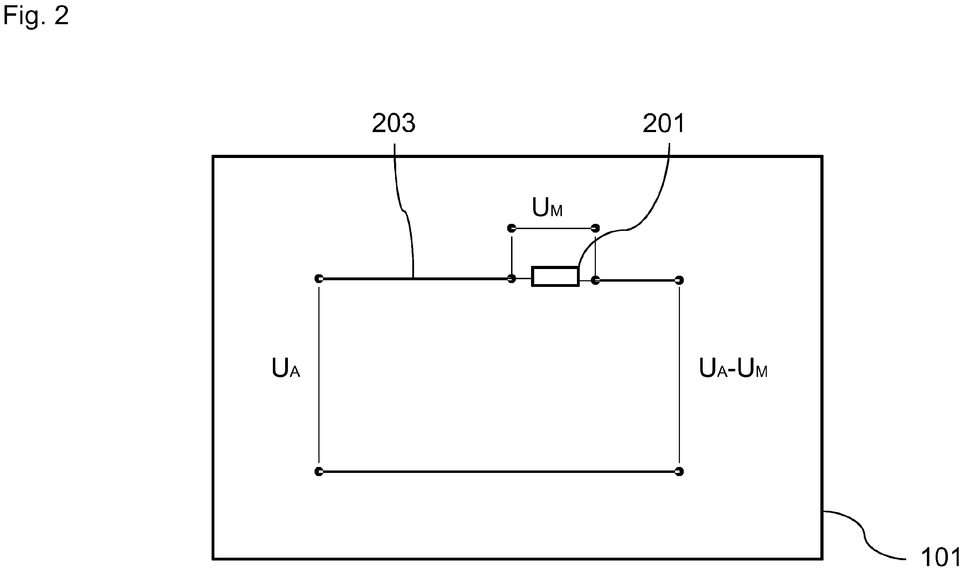

Die Messanordnung 101 ist mit weiteren Details in Fig. 2 schematisch dargestellt. Die Messanordnung 101 weist einen Messwiderstand 201 auf und erfasst wiederholt in zeitlichen Abständen die Stromamplitude des Ausgangsstromes des Energieversorgungsgerätes 100 (siehe Fig.1). Die Messanordnung 101 erfasst die Stromamplitude des Ausgangsstromes auf der Basis eines Spannungsabfalls U_{A}-U_{M} an dem Messwiederstand 201, wobei U_{A} die Ausgangsspannung an dem Ausgang der Messanordnung und U_{M} die Spannung über den Messwiderstand 201 bezeichnet.

Der Messwiderstand 201 ist in Form eines Messshunts, wie in Fig. 2 dargestellt, gegeben. Der Strom, der durch einen Messwiderstand 201 fließt, verursacht einen zu ihm proportionalen Spannungsabfall U_{A}-U_{M}, der gemessen wird. Der Messwiderstand 201 wird zu einer Messschaltung 203 parallel geschaltet, wobei der Spannungsabfall an dem Messwiderstand 201 für Messungen der Stromamplitude genutzt wird. Der Widerstandswert des Messwiderstandes 201 liegt beispielsweise im Milli-Ohm-Bereich oder darunter bei einigen zehntel oder hundertsten Milli-Ohm.

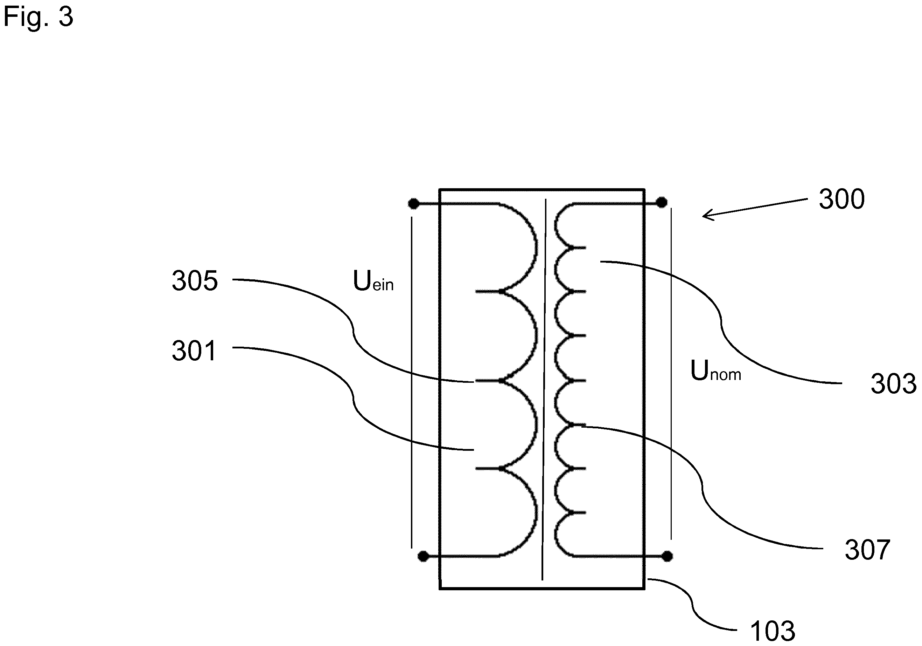

Mit der Messanordnung 101 elektrisch verbunden ist der Signalgenerator 103 (siehe Fig.1). Fig. 3 zeigt eine schematische Darstellung des Signalgenerators 103, der einen Transformator 300 umfasst. Der Transformator 300 weist eine Primärseite 301 auf, welche mit einer Eingangsspannung Uₑᵢₙ beaufschlagt wird, und eine Sekundärseite 303, welche dann eine nominelle Ausgangsspannung Uₙₒₘ bereitstellt.

Der Transformator des Signalgenerators weist auf seiner Primärseite 301 eine Primärwicklung 305 auf, die direkt mit der Eingangsspannung Uₑᵢₙ, d.h. der Wechselspannung des Energieversorgungsnetzes und der Netzfrequenz des Energieversorgungsnetzes, gespeist wird und auf seiner Sekundärseite 303 eine Sekundärwicklung 307, die die Ausgangsspannung Uₙₒₘ bereitstellt. Der Transformator 300 des Signalgenerators 103 setzt die Eingangsspannung Uₑᵢₙ, d.h. die Wechselspannung des Energieversorgungsnetzes, auf den oder die erforderlichen Ausgangsspannungswerte Uₙₒₘ um und stellt die galvanische Netztrennung sicher.

Die Sekundär-Wechselspannung auf der Sekundärseite 303 des Transformators 300 kann mittels eines Gleichrichters und eines Glättungskondensators (nicht in Fig. 3 dargestellt) in eine Ausgangsgleichspannung umgewandelt werden, welche am Ausgang des Signalgenerators 103 bereitgestellt werden kann. Zudem stellen gegebenenfalls ein nachfolgender Linearregler und ein Pufferkondensator (nicht in Fig. 3 dargestellt) eine konstant haltbare Ausgangsspannung Uₙₒₘ bereit.

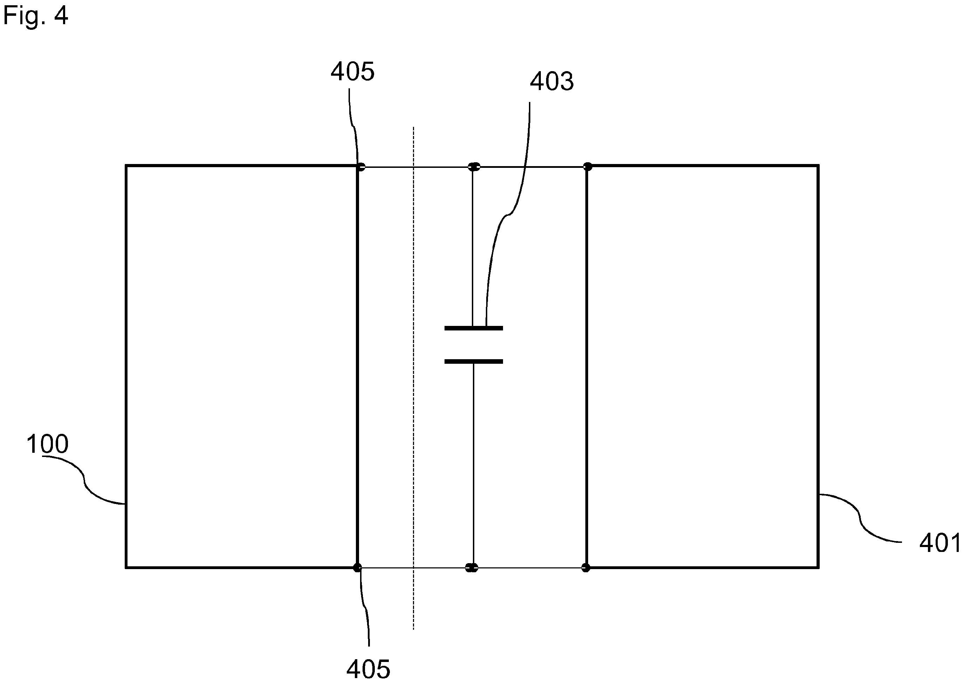

Fig. 4 zeigt eine schematische Darstellung des Energieversorgungsgerätes 100, an dessen Ausgang 405 ein Verbraucher 401 angeschlossen ist. Dem Verbraucher 401 parallel geschaltet ist ein Kondensator 403. Der Kondensator 403 stellt eine Stützkapazität bereit, welcher eine vorbestimmte Mindestleistung mit einem Mindestlaststrom und einer Mindestlastspannung bereitstellt. Durch Zwischenschalten der Stützkapazität wird sicher gestellt, dass ein an das Energieversorgungsgerät 100 angeschlossener Verbraucher 401 einen Stromschwellwert, insbesondere den zweiten Stromschwellwert, überschreitet, so dass das Energieversorgungsgerät 100 in seinen Aktivzustand übergeht, um den angeschlossenen Verbraucher 401 automatisch mit Energie zu versorgen.

Bei dem angeschlossenen Verbraucher 401 kann es sich um ein elektrisches Gerät, um einen Motor, um einen SPS-Verbraucher (Speicher Programmierbare Steuerung), um eine Industrieanlage, um ein Hutschienen montierbares Gerät, um einen Steuerschrank oder um einen sonstigen elektrischen Verbraucher handeln. Der angeschlossene Verbraucher kann mit Gleichspannung oder mit Wechselspannung betreibbar sein.

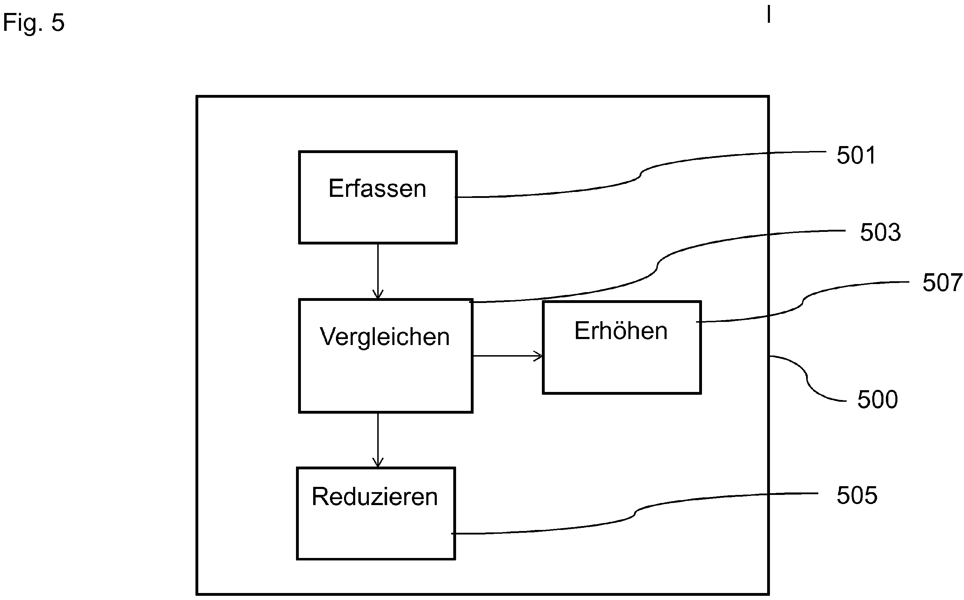

Fig. 5 zeigt ein schematisches Diagramm zum Ablauf des Verfahrens 500 zum Betreiben eines Energieversorgungsgerätes 100. Das Verfahren 500 zum Betreiben des Energieversorgungsgerätes 100 umfasst zunächst ein Erfassen 501 einer Stromamplitude des Ausgangsstromes 601 des Energieversorgungsgerätes 100 mittels der Messanordnung 101. Die erfasste Stromamplitude des Ausgangsstromes 601 wird dann mit einstellbaren oder vorgespeicherten Stromschwellwerten verglichen. Nach dem Vergleichen 503 mit einem ersten Stromschwellwert I1 und einem zweiten Stromschwellwert I2 erfolgt abhängig von dem Ergebnis des Vergleichs 503 entweder ein Reduzieren 505 der Ausgangspannung 603 oder ein Erhöhen 507 der Ausgangsspannung 603.

Befindet sich das Energieversorgungsgerät 100 in seinem ersten Betriebszustand 605, seinem Aktivzustand, in dem der oder die an das Energieversorgungsgerät 100 angeschlossenen Verbraucher 401 mit Energie versorgt werden, so geht das Energieversorgungsgerät 100 bei Erfassen 501 eines Stromschwellwertes, der unterhalb eines ersten Stromschwellwertes I1 liegt, von seinem ersten Betriebszustand 605 in seinen zweiten Betriebszustand 607 über. Dieser Übergang erfolgt durch ein Reduzieren 505 der Spannungsamplitude der Ausgangsspannung 603 des Energieversorgungsgerätes 100 auf einen einstellbaren oder vorgespeicherten Ausgangsspannungswert U_{low}. Der zweite Betriebszustand 607 ist ein Energiesparzustand, der mit der reduzierten Ausgangsspannung U_{low} betrieben wird.

Befindet sich das Energieversorgungsgerät 100 in seinem zweiten Betriebszustand 607, dem Energiesparzustand, so geht das Energieversorgungsgerät 100 bei Erfassen 501 eines Stromschwellwertes, der oberhalb eines zweiten Stromschwellwertes I2 liegt, von seinem zweiten Betriebszustand 607 in seinen ersten Betriebszustand 605 über. Dieser Übergang erfolgt durch ein Erhöhen 507 der Spannungsamplitude der Ausgangsspannung 603 des Energieversorgungsgerätes 100 auf einen einstellbaren oder vorgespeicherten Ausgangsspannungswert Uₙₒₘ. Der erste Betriebszustand 605 ist der Aktivzustand, der mit der nominellen Ausgangsspannung Uₙₒₘ betrieben wird.

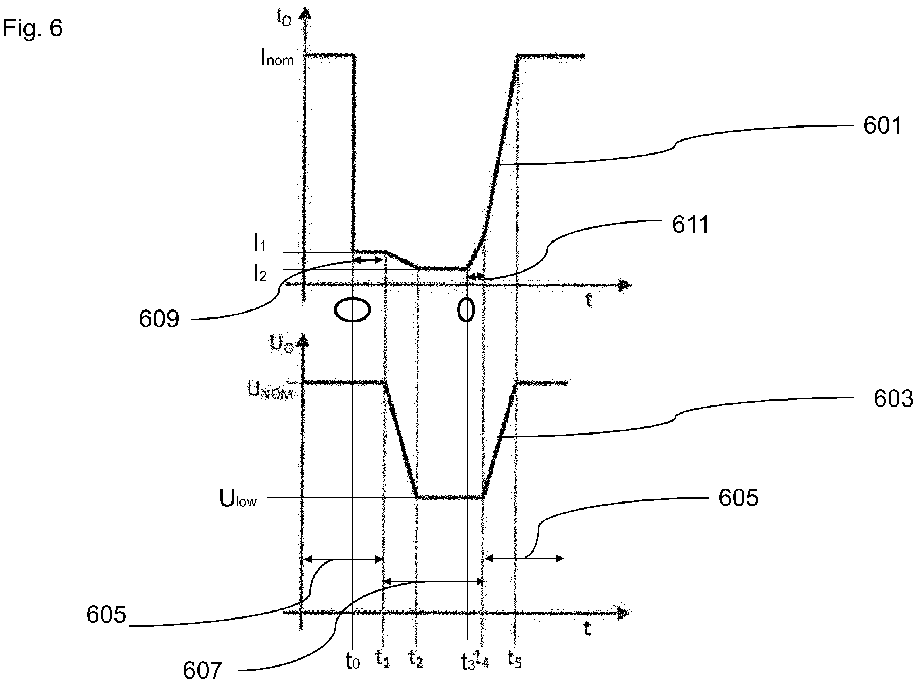

Fig. 6 zeigt eine schematische Darstellung der Ausgangsspannung und des Ausgangsstromes des Energieversorgungsgerätes. In seinem ersten Betriebszustand 605 stellt das Energieversorgungsgerät 100 an seinem Ausgang eine Ausgangsspannungswert Uₙₒₘ und einen Ausgangsstromwert Iₙₒₘ bereit oder wird auf diese Werte erhöht, so dass angeschlossene Verbraucher 401 mit Energie versorgt werden können. Der Verlauf der Amplitude des Ausgangsstromes 601 und der Amplitude der Ausgangsspannung 603 sind in ihrem zeitlichen Verlauf sowohl im ersten Betriebszustand 605 als auch im zweiten Betriebszustand 607 in Fig. 6 dargestellt.

Zu einem Zeitpunkt t₀ wird ein an das Energieversorgungsgerät 100 angeschlossener Verbraucher 401 abgeschaltet, so dass sich bis zu einem Zeitpunkt t₁ die Amplitude des Ausgangsstromes 601 auf einen ersten Stromschwellwert I1 oder auf einen Wert darunter reduziert, während die Amplitude der Ausgangsspannung 603 auf dem Ausgangsspannungswert Uₙₒₘ konstant geblieben ist. Erst nach Ablauf des ersten Verzögerungsintervalls 609, das einer Zeitspanne t₁-t₀ entspricht, schaltet sich das Energieversorgungsgerät 100 von seinem ersten Betriebszustand 605 in den zweiten Betriebszustand 607 um. Dies hat zur Folge, dass zwischen den Zeitpunkten t₁ und t₂ die Amplitude der Ausgangsspannung auf den Ausgangsspannungswert U_{low} und die Amplitude des Ausgangsstromes auf den zweiten Stromschwellwert I2 reduziert wird.

Beispielsweise wird die Amplitude der Ausgangsspannung von 24 V auf 8V bis 16V, oder beispielsweise auf 10-12 V reduziert, während die Amplitude des Ausgangsstromes um 5-20% unterhalb der Amplitude des Nennstromes reduziert wird.

Der verbleibende Ausgangsstrom I2 wird im zweiten Betriebszustand 607 widerholt in equidistanten Zeitabständen gemessen. Solange die Amplitude des Ausgangsstromes den zweiten Stromschwellwert I2 nicht überschreitet, verbleibt das Energieversorgungsgerät 100 in seinem zweiten Betriebszustand 607. Erst wenn zu einem Zeitpunkt t₃ ein Verbraucher 401 mit einer Last an das Energieversorgungsgerät 100 angeschlossen oder zugeschaltet wird, wird die Amplitude des Ausgangsstromes 601 durch den Verbraucher 401 bis zu einem Zeitpunkt t₄ erhöht, während die Amplitude der Ausgangsspannung 603 konstant auf dem Ausgangsspannungswert U_{low} gehalten wird. Die Zuschaltung des Verbrauchers 401 mit einer Stützkapazität kann auch in einem Strompeak der Amplitude des Ausgangsstromes 601 resultieren (nicht dargestellt). In beiden Fällen wird die Erhöhung der Amplitude des Ausgangsstromes als Beendigung des zweiten Betriebszustandes 607 ausgewertet. Infolge dessen wird zum Zeitpunkt t₄, also nach Ablauf eines zweiten Verzögerungsintervalls 611, welches die Zeitspanne t₄-t₃ umfasst, die Amplitude des Ausgangsstromes 601 auf den Ausgangsstrom Iₙₒₘ und die Amplitude der Ausgangsspannung auf die nominelle Ausgangsspannung Uₙₒₘ 603 bis zum Zeitpunkt t₅ erhöht.

Zum Zeitpunkt t5 stellt das Energieversorgungsgerät eine Ausgangsspannung Uₙₒₘ und einen Ausgangsstrom Iₙₒₘ bereit, mit denen der angeschlossene Verbraucher 401 betrieben werden kann. Die Ausgangsspannung Uₙₒₘ liegt beispielsweise bei 24 V oder mehr. Beispielsweise werden 60 V für die Ausgangsspannung Uₙₒₘ nicht überschritten, um einen Sicherungsbereich nicht zu überschreiten. Der Ausgangsstrom Iₙₒₘ liegt beispielsweise in einem Bereich zwischen 40 Ampere und 80 Ampere.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Energieversorgungsgerät
- 101: Messanordnung
- 103: Signalgenerator

- 201: Messwiderstand
- 203: Messschaltung

- 300: Transformator
- 301: Primärseite
- 303: Sekundärseite
- 305: Primärwicklung
- 307: Sekundärwicklung

- 401: Verbraucher
- 403: Kondensator
- 405: Ausgang

- 500: Verfahren
- 501: Erfassen
- 503: Vergleichen
- 505: Reduzieren
- 507: Erhöhen

- 601: Ausgangsstrom
- 603: Ausgangsspannung
- 605: erster Betriebszustand
- 607: zweiter Betriebszustand
- 609: erstes Verzögerungsintervall
- 611: zweites Verzögerungsintervall

- I1: erster Stromschwellwert
- I2: zweiter Stromschwellwert
- Iₙₒₘ: Amplitude des Ausgangsstromes im ersten Betriebszustand
- Uₙₒₘ: Amplitude der Ausgangsspannung im ersten Betriebszustand
- U_{low}: Amplitude der Ausgangsspannung im zweiten Betriebszustand
- U_{A}: Ausgangsspannung an dem Ausgang der Messanordnung
- U_{M}: Spannung über den Messwiderstand
- U_{A}-U_{M}: Spannungsabfalls
- Uₑᵢₙ: Eingangsspannung

- t0: Zeitpunkt
- t1: Zeitpunkt
- t2: Zeitpunkt
- t3: Zeitpunkt
- t4: Zeitpunkt
- t5: Zeitpunkt

## Patentansprüche

1. Energieversorgungsgerät (100) zum Bereitstellen einer Ausgangsspannung (603) und eines Ausgangsstroms (601), wobei das Energieversorgungsgerät (100) einen ersten Betriebszustand (605) und einen zweiten Betriebszustand (607) aufweist, mit:
einer Messanordnung (101) zum Erfassen einer Stromamplitude des Ausgangsstromes (601) des Energieversorgungsgerätes (100); und
einem Signalgenerator (103) zum Erzeugen der Ausgangsspannung (603) und des Ausgangsstroms (601), wobei der Signalgenerator (103) ausgebildet ist, in dem ersten Betriebszustand (605) des Energieversorgungsgerätes (100) eine Spannungsamplitude der Ausgangsspannung (603) des Energieversorgungsgerätes (100) zu reduzieren, um in den zweiten Betriebszustand (607) überzugehen, falls die erfasste Stromamplitude einen ersten Stromschwellwert (I1) unterschreitet, und wobei der Signalgenerator (103) ausgebildet ist, in dem zweiten Betriebszustand (607) des Energieversorgungsgerätes (100) eine Spannungsamplitude der Ausgangsspannung (603) des Energieversorgungsgerätes (100) zu erhöhen, um in den ersten Betriebszustand (605) überzugehen, falls die erfasste Stromamplitude einen zweiten Stromschwellwert (I2) überschreitet,
**dadurch gekennzeichnet, dass**
der Signalgenerator (103) dazu ausgebildet ist, die Spannungsamplitude der Ausgangsspannung (603) des Energieversorgungsgerätes (100) in dem ersten Betriebszustand (605) nach Ablauf eines einstellbaren oder vorgespeicherten ersten Verzögerungszeitintervalls (609) zu reduzieren, und
der Signalgenerator (103) dazu ausgebildet ist, die Spannungsamplitude der Ausgangsspannung (603) des Energieversorgungsgerätes (100) in dem zweiten Betriebszustand (607) nach Ablauf eines vorgespeicherten zweiten Verzögerungszeitintervalls (611) nach der Erfassung der Überschreitung des zweiten Stromschwellwertes (I2) der Stromamplitude zu erhöhen.

2. Energieversorgungsgerät (100) nach Anspruch 1, wobei der erste Betriebszustand (605) ein Aktivzustand ist und wobei der zweite Betriebszustand (607) ein Energiesparzustand, insbesondere ein Stand-by-Modus oder ein Sleep-Modus, ist.

3. Energieversorgungsgerät (100) nach Anspruch 1 oder 2, wobei der zweite Stromschwellwert (I2) der erste Stromschwellwert (I1) oder ein weiterer Stromschwellwert ist.

4. Energieversorgungsgerät (100) nach einem der vorstehenden Ansprüche, wobei der erste Stromschwellwert (I1) oder der zweite Stromschwellwert (I2) einstellbar oder vorgespeichert sind.

5. Energieversorgungsgerät (100) nach einem der vorstehenden Ansprüche, wobei der Signalgenerator (103) ausgebildet ist, die erfasste Stromamplitude mit dem ersten Stromschwellwert (I1) oder dem zweiten Stromschwellwert (I2) zu vergleichen.

6. Energieversorgungsgerät (100) nach einem der vorstehenden Ansprüche, wobei der Signalgenerator (103) ausgebildet ist, die Spannungsamplitude der Ausgangsspannung (603) des Energieversorgungsgerätes (100) auf einen einstellbaren ersten oder vorgespeicherten ersten Spannungsamplitudenwert (U_{low}) zu reduzieren, falls die erfasste Stromamplitude den ersten Stromschwellwert (I1) unterschreitet.

7. Energieversorgungsgerät (100) nach einem der vorstehenden Ansprüche, wobei der Signalgenerator (103) ausgebildet ist, die Spannungsamplitude der Ausgangsspannung (6063) des Energieversorgungsgerätes (100) auf einen einstellbaren zweiten oder vorgespeicherten zweiten Spannungsamplitudenwert zu erhöhen (Uₙₒₘ), falls die erfasste Stromamplitude den zweiten Stromschwellwert (I2) überschreitet.

8. Energieversorgungsgerät (100) nach einem der vorstehenden Ansprüche, wobei die Messanordnung einen Messwiderstand (201) aufweist.

9. Energieversorgungsgerät (100) nach einem der vorangegangenen Ansprüche, wobei der Signalgenerator (103) einen Transformator (300) mit einer Primärseite (301), welche mit einer Eingangsspannung (Uₑᵢₙ) beaufschlagbar ist, und einer Sekundärseite (303) zum Ausgeben der Ausgangsspannung (603) aufweist.

10. Verfahren (500) zum Betreiben eines Energieversorgungsgerätes (100), wobei das Energieversorgungsgerät (100) einen ersten Betriebszustand (605) und einen zweiten Betriebszustand (607), eine Messanordnung (101) zum Erfassen einer Stromamplitude eines Ausgangsstromes (601) des Energieversorgungsgerätes (100) sowie einen Signalgenerator (103) zum Steuern einer Spannungsamplitude der Ausgangsspannung (603) des Energieversorgungsgerätes (100) aufweist, mit:
Erfassen (501) einer Stromamplitude des Ausgangsstromes (601) des Energieversorgungsgerätes (100) mittels der Messanordnung (101);
Reduzieren (505) einer Spannungsamplitude der Ausgangsspannung (603) des Energieversorgungsgerätes (101) in dem ersten Betriebszustand (605) des Energieversorgungsgerätes (100), mittels des Signalgenerators (103) um in den zweiten Betriebszustand (607) überzugehen, falls die erfasste Stromamplitude einen ersten Stromschwellwert (I1) unterschreitet;
Erhöhen (507) der Spannungsamplitude der Ausgangsspannung (603) des Energieversorgungsgerätes (100) in dem zweiten Betriebszustand (607) des Energieversorgungsgerätes (100) mittels des Signalgenerators (103), um in den ersten Betriebszustand (605) überzugehen, falls die erfasste Stromamplitude einen zweiten Stromschwellwert (I2) überschreitet;
Reduzieren der Spannungsamplitude der Ausgangsspannung (603) des Energieversorgungsgerätes (100) in dem ersten Betriebszustand (605) des Energieversorgungsgerätes (100) mittels des Signalgenerators (103) nach Ablauf eines einstellbaren oder vorgespeicherten ersten Verzögerungszeitintervalls (609); und
Erhöhen der Spannungsamplitude der Ausgangsspannung (603) des Energieversorgungsgerätes (100) in dem zweiten Betriebszustand (607) des Energieversorgungsgeräts (100) mittels des Signalgenerators (103) nach Ablauf eines vorgespeicherten zweiten Verzögerungszeitintervalls (611) nach der Erfassung der Überschreitung des zweiten Stromschwellwertes (I2) der Stromamplitude.

11. Verfahren (500) nach Anspruch 10, wobei die erfasste Stromamplitude von dem Signalgenerator (103) mit dem ersten Stromschwellwert (I1) oder dem zweiten Stromschwellwert (I2) verglichen wird.

12. Verfahren (500) nach Anspruch 10 oder 11, wobei der Signalgenerator (103) die Spannungsamplitude der Ausgangsspannung (603) des Energieversorgungsgerätes (100) auf einen einstellbaren ersten oder vorgespeicherten ersten Spannungsamplitudenwert (U_{low}) reduziert, falls die erfasste Stromamplitude den ersten Stromschwellwert (I1) unterschreitet.

13. Verfahren (500) nach einem der Ansprüche 10 bis 12, wobei der Signalgenerator (103) die Spannungsamplitude der Ausgangsspannung (603) des Energieversorgungsgerätes (100) auf einen einstellbaren zweiten oder vorgespeicherten zweiten Spannungsamplitudenwert erhöht, falls die erfasste Stromamplitude den zweiten Stromschwellwert (I2) oder den weiteren Stromschwellwert überschreitet.

## Claims

1. Power supply device (100) for providing an output voltage (603) and an output current (601), wherein the power supply device (100) has a first operating state (605) and a second operating state (607), comprising:
a measuring arrangement (101) for detecting a current amplitude of the output current (601) of the power supply device (100); and
a signal generator (103) for generating the output voltage (603) and the output current (601), wherein the signal generator (103) is configured to reduce a voltage amplitude of the output voltage (603) of the power supply device (100) in the first operating state (605) of the power supply device (100) to transition into the second operating state (607), if the detected current amplitude falls below a first current threshold value (11), and wherein the signal generator (103) is configured to increase a voltage amplitude of the output voltage (603) of the power supply device (100) in the second operating state (607) of the power supply device (100) to transition to the first operating state (605), if the detected current amplitude exceeds a second current threshold value (12),
**characterized in that** the signal generator (103) is configured to reduce the voltage amplitude of the output voltage (603) of the power supply device (100) in the first operating state (605) after an adjustable or pre-stored first delay time interval (609) has elapsed, and
the signal generator (103) is configured to increase the voltage amplitude of the output voltage (603) of the power supply device (100) in the second operating state (607) after a pre-stored second delay time interval (611) has elapsed after detecting the exceeding of the second current threshold value (12) of the current amplitude.

2. Power supply device (100) according to claim 1, wherein the first operating state (605) is an active state and wherein the second operating state (607) is an energy-saving state, in particular a stand-by mode or a sleep mode.

3. Power supply device (100) according to claim 1 or 2, wherein the second current threshold value (12) is the first current threshold value (11) or a further current threshold value.

4. Power supply device (100) according to one of the preceding claims, wherein the first current threshold value (11) or the second current threshold value (12) are adjustable or pre-stored.

5. Power supply device (100) according to one of the preceding claims, wherein the signal generator (103) is configured to compare the detected current amplitude with the first current threshold value (11) or the second current threshold value (12).

6. Power supply device (100) according to one of the preceding claims, wherein the signal generator (103) is configured to reduce the voltage amplitude of the output voltage (603) of the power supply device (100) to an adjustable first or pre-stored first voltage amplitude value (U_{low}) if the detected current amplitude falls below the first current threshold value (11).

7. power supply device (100) according to one of the preceding claims, wherein the signal generator (103) is configured to increase the voltage amplitude of the output voltage (6063) of the power supply device (100) to an adjustable second or pre-stored second voltage amplitude value (Uₙₒₘ) if the detected current amplitude exceeds the second current threshold value (12).

8. Power supply device (100) according to one of the preceding claims, the measuring arrangement comprises a measuring resistor (201).

9. Power supply device (100) according to one of the preceding claims, the signal generator (103) comprises a transformer (300) with a primary side (301), to which an input voltage (Uₑᵢₙ) is applicable, and a secondary side (303) for outputting the output voltage (603).

10. Method (500) for operating a power supply device (100), wherein the power supply device (100) comprises a first operating state (605) and a second operating state (607), a measuring arrangement (101) for detecting a current amplitude of an output current (601) of the power supply device (100), and a signal generator (103) for controlling a voltage amplitude of the output voltage (603) of the power supply device (100), comprising:
detecting (501) a current amplitude of the output current (601) of the power supply device (100) by means of the measuring arrangement (101);
reducing (505) a voltage amplitude of the output voltage (603) of the power supply device (101) in the first operating state (605) of the power supply device (100), by means of the signal generator (103) to transition to the second operating state (607) if the detected current amplitude falls below a first current threshold (11);
increasing (507) the voltage amplitude of the output voltage (603) of the power supply device (100) in the second operating state (607) of the power supply device (100) by means of the signal generator (103) to transition to the first operating state (605) if the detected current amplitude exceeds a second current threshold value (12);
reducing the voltage amplitude of the output voltage (603) of the power supply device (100) in the first operating state (605) of the power supply device (100) by means of the signal generator (103) after an adjustable or pre-stored first delay time interval (609) has elapsed; and
increasing the voltage amplitude of the output voltage (603) of the power supply device (100) in the second operating state (607) of the power supply apparatus (100) by means of the signal generator (103) after a pre-stored second delay time interval (611) has elapsed after the detection of the exceeding of the second current threshold value (12) of the current amplitude.

11. Method (500) according to claim 10, wherein the detected current amplitude is compared by the signal generator (103) to the first current threshold value (11) or the second current threshold value (12).

12. Method (500) according to claim 10 or 11, wherein the signal generator (103) reduces the voltage amplitude of the output voltage (603) of the power supply device (100) to an adjustable first or pre-stored first voltage amplitude value (U_{low}) if the detected current amplitude falls below the first current threshold value (11).

13. Method (500) according to one of claims 10 to 12, wherein the signal generator (103) increases the voltage amplitude of the output voltage (603) of the power supply device (100) to an adjustable second or pre-stored second voltage amplitude value, if the detected current amplitude exceeds the second current threshold value (12) or the further current threshold value.

## Revendications

1. Appareil d'alimentation en énergie (100), destiné à fournir une tension de sortie (603) et un courant de sortie (601), dans lequel l'appareil d'alimentation en énergie (100) possède un premier état de fonctionnement (605) et un deuxième état de fonctionnement (607), qui comprend :
un système de mesure (101) servant à détecter une amplitude de courant du courant de sortie (601) de l'appareil d'alimentation en énergie (100) ; et
un générateur de signal (103) servant à produire la tension de sortie (603) et le courant de sortie (601), dans lequel le générateur de signal (103) est adapté pour réduire une amplitude de tension de la tension de sortie (603) de l'appareil d'alimentation en énergie (100) dans le premier état de fonctionnement (605) de l'appareil d'alimentation en énergie (100), afin de basculer dans le deuxième état de fonctionnement (607) lorsque l'amplitude de courant détectée passe en dessous d'un premier seuil d'intensité (I1), et dans lequel le générateur de signal (103) est adapté pour augmenter une amplitude de tension de la tension de sortie (603) de l'appareil d'alimentation en énergie (100) dans le deuxième état de fonctionnement (607) de l'appareil d'alimentation en énergie (100), afin de basculer dans le premier état de fonctionnement (605) lorsque l'amplitude de courant détectée dépasse un deuxième seuil d'intensité (12),
**caractérisé en ce que** le générateur de signal (103) est adapté pour réduire l'amplitude de tension de la tension de sortie (603) de l'appareil d'alimentation en énergie (100) dans le premier état de fonctionnement (605) après écoulement d'un premier intervalle de temps de retard (609) réglable ou stocké à l'avance, et
le générateur de signal (103) est adapté pour augmenter l'amplitude de tension de la tension de sortie (603) de l'appareil d'alimentation en énergie (100) dans le deuxième état de fonctionnement (607) après écoulement d'un deuxième intervalle de temps de retard (611) stocké à l'avance après détection du dépassement du deuxième seuil d'intensité (I2) de l'amplitude de courant.

2. Appareil d'alimentation en énergie (100) selon la revendication 1, dans lequel le premier état de fonctionnement (605) est un état actif et dans lequel le deuxième état de fonctionnement (607) est un état d'économie d'énergie, en particulier un mode de veille ou un mode de sommeil.

3. Appareil d'alimentation en énergie (100) selon la revendication 1 ou 2, dans lequel le deuxième seuil d'intensité (I2) est le premier seuil d'intensité (I1) ou un autre seuil d'intensité.

4. Appareil d'alimentation en énergie (100) selon l'une des revendications précédentes, dans lequel le premier seuil d'intensité (I1) ou le deuxième seuil d'intensité (I2) est réglable ou stocké à l'avance.

5. Appareil d'alimentation en énergie (100) selon l'une des revendications précédentes, dans lequel le générateur de signal (103) est adapté pour comparer l'amplitude de courant détectée au premier seuil d'intensité (I1) ou au deuxième seuil d'intensité (I2).

6. Appareil d'alimentation en énergie (100) selon l'une des revendications précédentes, dans lequel le générateur de signal (103) est adapté pour réduire l'amplitude de tension de la tension de sortie (603) de l'appareil d'alimentation en énergie (100) à une première valeur d'amplitude de tension (U_{low}) réglable ou stockée à l'avance lorsque l'amplitude de courant détectée passe en dessous du premier seuil d'intensité (I1).

7. Appareil d'alimentation en énergie (100) selon l'une des revendications précédentes, dans lequel le générateur de signal (103) est adapté pour augmenter l'amplitude de tension de la tension de sortie (6063) de l'appareil d'alimentation en énergie (100) à une deuxième valeur d'amplitude de tension (Uₙₒₘ) réglable ou stockée à l'avance lorsque l'amplitude de courant détectée dépasse le deuxième seuil d'intensité (I2).

8. Appareil d'alimentation en énergie (100) selon l'une des revendications précédentes, dans lequel le dispositif de mesure comporte une résistance de mesure (201) .

9. Appareil d'alimentation en énergie (100) selon l'une des revendications précédentes, dans lequel le générateur de signal (103) comporte un transformateur (300) possédant un côté primaire (301) auquel peut être appliquée une tension d'entrée (Uₑᵢₙ) et un côté secondaire (303) servant à fournir en sortie la tension de sortie (603).

10. Procédé (500) pour faire fonctionner un appareil d'alimentation en énergie (100), dans lequel l'appareil d'alimentation en énergie (100) possède un premier état de fonctionnement (605) et un deuxième état de fonctionnement (607), un système de mesure (101) servant à détecter une amplitude de courant d'un courant de sortie (601) de l'appareil d'alimentation en énergie (100) et un générateur de signal (103) servant à commander une amplitude de tension de la tension de sortie (603) de l'appareil d'alimentation en énergie (100), consistant à :
détecter (501) une amplitude de courant du courant de sortie (601) de l'appareil d'alimentation en énergie (100) au moyen du système de mesure (101) ;
réduire (505) une amplitude de tension de la tension de sortie (603) de l'appareil d'alimentation en énergie (101) dans le premier état de fonctionnement (605) de l'appareil d'alimentation en énergie (100), au moyen du générateur de signal (103), afin de basculer dans le deuxième état de fonctionnement (607) lorsque l'amplitude de courant détectée passe en dessous d'un premier seuil d'intensité (I1) ;
augmenter (507) l'amplitude de tension de la tension de sortie (603) de l'appareil d'alimentation en énergie (100) dans le deuxième état de fonctionnement (607) de l'appareil d'alimentation en énergie (100) au moyen du générateur de signal (103), afin de basculer dans le premier état de fonctionnement (605) lorsque l'amplitude de courant détectée dépasse un deuxième seuil d'intensité (I2) ;
réduire l'amplitude de tension de la tension de sortie (603) de l'appareil d'alimentation en énergie (100) dans le premier état de fonctionnement (605) de l'appareil d'alimentation en énergie (100) au moyen du générateur de signal (103) après écoulement d'un premier intervalle de temps de retard (609) réglable ou stocké à l'avance ; et
augmenter l'amplitude de tension de la tension de sortie (603) de l'appareil d'alimentation en énergie (100) dans le deuxième état de fonctionnement (607) de l'appareil d'alimentation en énergie (100) au moyen du générateur de signal (103) après écoulement d'un deuxième intervalle de temps de retard (611) stocké à l'avance après détection du dépassement du deuxième seuil d'intensité (I2) de l'amplitude de courant.

11. Procédé (500) selon la revendication 10, dans lequel l'amplitude de courant détectée est comparée par le générateur de signal (103) au premier seuil d'intensité (I1) ou au deuxième seuil d'intensité (I2).

12. Procédé (500) selon la revendication 10 ou 11, dans lequel le générateur de signal (103) réduit l'amplitude de tension de la tension de sortie (603) de l'appareil d'alimentation en énergie (100) à une première valeur d'amplitude de tension (U_{low}) réglable ou stockée à l'avance lorsque l'amplitude de courant détectée passe en dessous du premier seuil d'intensité (I1).

13. Procédé (500) selon l'une des revendications 10 à 12, dans lequel le générateur de signal (103) augmente l'amplitude de tension de la tension de sortie (603) de l'appareil d'alimentation en énergie (100) à une deuxième valeur d'amplitude de tension réglable ou stockée à l'avance lorsque l'amplitude de courant détectée dépasse le deuxième seuil d'intensité (I2) ou l'autre seuil d'intensité.
